# EUROPEAN PATENT APPLICATION

(11) **EP 4 756 421 A1**
(43) Date of publication of application: **10.06.2026**
(21) Application number: 24848606.0
(22) Date of filing: 15.04.2024
(51) Int. Cl.: G01N 30/00, G01N 1/40, G01N 30/14

(54) **SAMPLE INTRODUCTION METHOD AND SAMPLE INTRODUCTION DEVICE**

(30) Priority: 31.07.2023 JP 2023124335
(71) Applicant: SHIMADZU CORPORATION, Kyoto-shi, Kyoto 604-8511 (JP)
(72) Inventor: KAWAMURA, Kazuhiro, Kyoto-shi, Kyoto 604-8511 (JP)
(74) Representative: Müller-Boré & Partner Patentanwälte PartG mbB
(86) International application number: PCT/JP2024/014982
(87) International publication number: WO 2025/027945

(57) **Abstract**

One aspect of the sample introduction method according to the present invention is a sample introduction method for performing collection and injection of a sample by an SPME method using an SPME Arrow, having an adsorption step (S3) of causing an adsorption part of the SPME Arrow to adsorb a target component in the sample, an exposure step (S4) of exposing the adsorption part of the SPME Arrow after the adsorption step to an atmosphere of a dry inert gas for a predetermined time, and an injection step (S5) of heating the adsorption part of the SPME Arrow after the exposure step to desorb the target component from the adsorption part and introduce the target component into an analysis apparatus.

## Description

### [Technical Field]

The present invention relates to a sample introduction method and apparatus for introducing a sample into an analysis apparatus such as a gas chromatograph apparatus, and more particularly, to a sample introduction method and apparatus using a solid phase micro extraction method.

### [Background Art]

When analyzing low-concentration components in a sample using a gas chromatograph apparatus (hereinafter referred to as "GC apparatus") including a gas chromatograph mass spectrometer, it is necessary to concentrate the target components before introducing them into the GC apparatus. The Solid Phase Micro Extraction (SPME) method is one of the widely used sample introduction methods primarily for such purposes.

In a general SPME method, first, an elongated fiber made of fused silica is inserted into a container in which a sample (liquid or solid) is sealed, and target components in a gas phase volatilized from the sample are adsorbed onto an adsorbent (liquid phase) coated on the surface of the fiber. Thereafter, the fiber is inserted into a vaporization chamber of a GC apparatus and heated, whereby the target components are desorbed from the adsorbent, carried by a carrier gas, and introduced into a column for analysis (see Patent Literature 1). However, with such conventional SPME fibers, it is difficult to increase the amount of components that can be adsorbed by the adsorbent, posing a problem in terms of detection sensitivity. There is also a problem that the mechanical durability of the fiber itself is low.

In contrast, a device called SPME Arrow has been developed in recent years (see Non-Patent Literature 1). In the SPME Arrow, a stainless steel rod having a larger outer diameter than a conventional fiber is used, and a large amount of adsorbent is held on the surface of the rod. As a result, in the SPME method using the SPME Arrow, the amount of adsorbed target components can be increased to concentrate them to a high concentration compared to the case of using a conventional SPME fiber, enabling high-sensitivity analysis.

### [Citation List]

### [Patent Literature]

Patent Literature 1: JP 2007-47156 A

### [Non-Patent Literature]

Non-Patent Literature 1: Kawamura, "Analysis of Aroma Component Profiles Using SPME Arrow-GC-MS", Journal of Japan Association on Odor Environment, Vol. 52, No. 4, 2021

### [Summary of Invention]

### [Technical Problem]

As disclosed in Non-Patent Literature 1 and the like, the present inventor is proceeding with studies on GC analysis of odor components and the like in samples using the SPME Arrow. For accurate analysis of odors, it is often necessary to detect components contained in trace amounts in a sample with high quantitative performance, and the SPME Arrow, which allows for high-concentration component concentration, is a very useful device. However, in repeating various experiments, it has been found that depending on the type of sample, the type of component, the conditions of GC analysis, and the like, problems arise such as the shape of the chromatographic peak collapsing, leading to a decrease in quantitative accuracy, or the retention time of the chromatographic peak shifting, preventing accurate identification.

The present invention has been made to solve such problems, and a main object thereof is to provide a sample introduction method and apparatus capable of improving the quantitative performance and identification performance of target components in analysis utilizing sample introduction by the SPME method using an SPME Arrow.

### [Solution to Problem]

One aspect of the sample introduction method according to the present invention is a sample introduction method for performing collection and injection of a sample by a solid phase micro extraction method using an SPME Arrow, having:
an adsorption step of causing an adsorption part of the SPME Arrow to adsorb a target component in the sample;
an exposure step of exposing the adsorption part of the SPME Arrow after the adsorption step to an atmosphere of a dry inert gas for a predetermined time; and
an injection step of heating the adsorption part of the SPME Arrow after the exposure step to desorb the target component from the adsorption part and introduce the target component into an analysis apparatus.

Further, one aspect of the sample introduction apparatus according to the present invention is a sample introduction apparatus that performs collection of a sample and injection into an analysis apparatus by a solid phase micro extraction method using an SPME Arrow, comprising:
an adsorption processing unit that inserts an adsorption part of the SPME Arrow into a container in which a sample is sealed and causes the adsorption part to adsorb a target component in the sample;
an exposure processing unit that exposes the adsorption part of the SPME Arrow after component adsorption in the adsorption processing unit is completed to an atmosphere of a dry inert gas for a predetermined time; and
a moving unit that moves the SPME Arrow between the adsorption processing unit and the exposure processing unit, and between the exposure processing unit and a component introduction position for introducing the target component adsorbed on the adsorption part into the analysis apparatus.

### [Advantageous Effects of Invention]

The present inventor repeated analyses on various samples and components under various analysis conditions and found that the main cause of the collapse of the shape of the chromatographic peak and the shift of the retention time as described above is that a solvent (aqueous solvent or organic solvent) contained in the sample is adsorbed in a large amount on the adsorption part of the SPME Arrow and is introduced into the analysis apparatus (GC apparatus). In contrast, in the above aspects of the sample introduction method and apparatus according to the present invention, at least a part of the solvent that has been adsorbed simultaneously when causing the adsorption part of the SPME Arrow to adsorb the target component in the sample can be removed from the adsorption part before the execution of the analysis.

Thereby, according to the above aspects of the sample introduction method and apparatus according to the present invention, for example, the influence of a solvent such as water or an organic solvent derived from the sample upon GC analysis is reduced, and the collapse of the shape of the chromatographic peak of the target component and the shift of the retention time can be suppressed. As a result, the quantitative performance and identification performance of the target component can be improved.

### [Brief Description of Drawings]

[Fig. 1] Fig. 1 is a flowchart showing an example of a work/processing procedure of an SPME method which is an embodiment of the present invention.
[Fig. 2] Fig. 2 is a schematic configuration diagram of an example of a sample introduction apparatus that implements the SPME method of the present embodiment.
[Fig. 3] Fig. 3 is a schematic configuration diagram of a conditioning/solvent purge unit in Fig. 2.
[Fig. 4] Fig. 4 is a diagram showing an example of a chromatogram obtained by GC analysis using a conventional SPME method.

### [Description of Embodiments]

### [Factors Causing Problems in Conventional SPME Method]

As described above, the SPME Arrow holds a large amount of adsorbent (liquid phase) on the surface of the rod. Therefore, in the SPME method using the SPME Arrow, not only the target component contained in the sample but also the solvent contained in the sample is adsorbed in a large amount by the adsorbent. Then, when the adsorption part of the SPME Arrow is heated in the vaporization chamber of the GC apparatus, a large amount of solvent is also introduced into the column together with the high-concentration target component. For example, when components in an aqueous sample are collected using the SPME Arrow, water contained as a solvent in the sample is also collected in a large amount by the adsorbent.

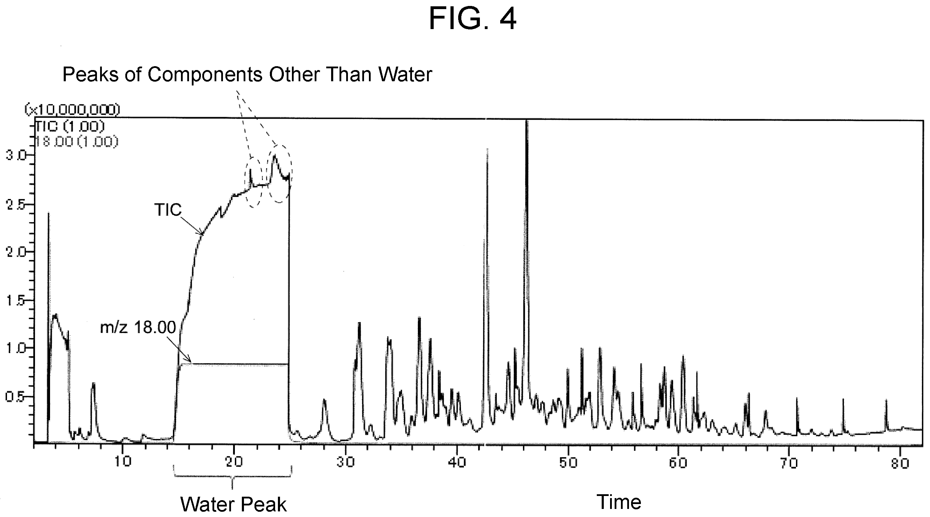

Fig. 4 is a diagram showing an example of a total ion chromatogram (TIC) obtained by performing GC/MS analysis of an aqueous sample using a conventional SPME method. Note that Fig. 4 also shows an extracted ion chromatogram of m/z 18 for reference.

On the mass spectrum, a peak derived from water mainly appears at m/z 18. In general GC/MS analysis, the lower limit of m/z (mass-to-charge ratio) is often set to about 35, so a peak derived from water is not observed on the chromatogram. However, when analysis is performed with the lower limit of m/z set to 17, a large peak derived from water is observed on the chromatogram (total ion chromatogram: TIC) as shown in Fig. 4. The time range in which this peak derived from water is observed is wide, and the peak of a component having a retention time in this time range rides on the curve of the peak derived from water, making it inevitable that the peak waveform shape collapses. In addition, the peak of another component appearing immediately after the large peak derived from water tends to have a shifted retention time under the influence of the large amount of water retained in the column.

Such influence of the solvent adsorbed in a large amount on the adsorbent of the SPME Arrow in GC analysis has not been generally known conventionally, and no measures have been taken to reduce the influence. In contrast, the present inventor conceived of reducing the influence of the solvent by implementing a step of removing the solvent without affecting the components adsorbed on the adsorbent as much as possible during the period from the collection of the components by the SPME Arrow until the introduction of the components into the GC apparatus, and completed the present invention.

The SPME method, which is an embodiment of the sample introduction method according to the present invention, and an apparatus for implementing the same will be described with reference to the accompanying drawings.

### [Configuration of Apparatus for Implementing SPME Method According to Present Invention]

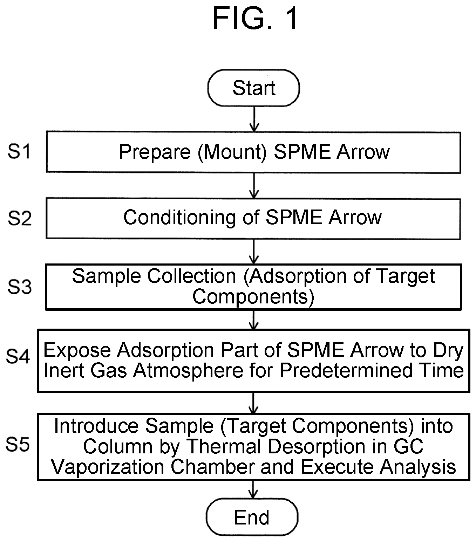

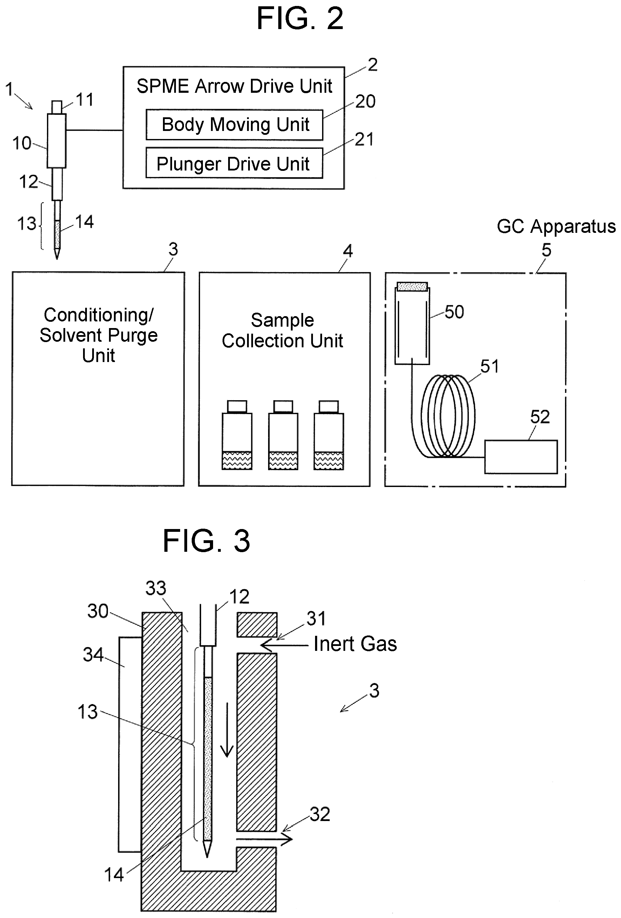

Fig. 1 is a flowchart showing an example of a work/processing procedure in the SPME method of the present embodiment. Fig. 2 is a schematic configuration diagram of an example of a sample introduction apparatus that implements this SPME method. Fig. 3 is a schematic configuration diagram of the conditioning/solvent purge unit in Fig. 2.

The sample introduction apparatus shown in Fig. 2 corresponds to an apparatus that selectively collects a plurality of prepared samples and automatically injects them into a GC apparatus, such as the autosampler system "AOC-6000 Plus" manufactured by Shimadzu Corporation. This sample introduction apparatus includes an SPME Arrow 1, an SPME Arrow drive unit 2, a conditioning/solvent purge unit 3, and a sample collection unit 4. The GC apparatus 5 in Fig. 2 includes a vaporization chamber 50, a column 51, and a detection unit 52. Although the GC apparatus 5 itself is not included in the sample introduction apparatus, the vaporization chamber 50 has a function of introducing target components into the column 51 together with the sample introduction apparatus.

The SPME Arrow 1 is generally commercially available, for example, as described in Non-Patent Literature 1, and has a holder 10, a plunger 11, a cylindrical needle 12, a rod 13 having a tip formed in an arrowhead shape, and an adsorption part 14 formed on a part of the surface of the rod 13. Fig. 2 is a diagram showing a state where the rod 13 protrudes from the needle 12, and the rod 13 can be accommodated in the needle 12 by the plunger 11. As the size of the SPME Arrow 1 and the type of adsorbent (liquid phase) held on the adsorption part 14, appropriate ones can be used according to the type of sample to be analyzed and the like.

The SPME Arrow drive unit 2 includes a body moving unit 20 and a plunger drive unit 21. The body moving unit 20 moves the SPME Arrow 1 among the conditioning/solvent purge unit 3, the sample collection unit 4, and the vaporization chamber 50. The plunger drive unit 21 advances the rod 13 from the needle 12 or accommodates it in the needle 12 by pushing or pulling the plunger 11 of the SPME Arrow 1.

As shown in Fig. 3, the conditioning/solvent purge unit 3 comprises a housing 30 in which a recess 33 having a space sufficient to accommodate the rod 13 of the SPME Arrow 1 is formed, and a heating/cooling unit 34 that heats and cools the housing 30. A gas supply opening 31 and a gas discharge opening 32 are formed in the housing 30. Although not shown, a dry inert gas (He, N₂, etc.) is supplied to the recess 33 through a pipe connected to the gas supply opening 31, and the inert gas that has circulated through the recess 33 is discharged to the outside through a pipe connected to the gas discharge opening 32.

### [Work/Processing Procedure of Example of SPME Method According to Present Invention]

The procedure from sample collection to analysis will be described with reference to Fig. 1. Note that the following description is based on the premise that the work is performed automatically using the sample introduction apparatus shown in Fig. 2, but it goes without saying that part of the work can be replaced by manual work by an operator.

Prior to analysis, the operator prepares an SPME Arrow of a type (size and adsorbent) suitable for analysis and mounts it at a predetermined position of the sample introduction apparatus (Step S1). Note that if the SPME Arrow used in the already performed analysis is used subsequently, Step S1 is omitted.

Next, when the start of analysis is instructed via an operation unit (not shown), the conditioning/solvent purge unit 3 performs conditioning on the SPME Arrow 1 (Step S2). Specifically, the body moving unit 20 moves the SPME Arrow 1 into the recess 33 of the conditioning/solvent purge unit 3, and the plunger drive unit 21 pushes the plunger 11 to expose the rod 13 (adsorption part 14). The heating/cooling unit 34 heats the adsorption part 14 to a predetermined temperature (for example, 200°C or higher) via the housing 30 and maintains the temperature for a certain period of time. Thereby, the heated adsorption part 14 is exposed to an atmosphere of dry inert gas, and various components adsorbed on the adsorption part 14 volatilize and are removed. That is, the adsorption part 14 is cleaned. The components removed at this time are mainly components that were adsorbed on the adsorption part 14 during the previous analysis and were not desorbed even by thermal desorption, contaminant components that adhered to the adsorption part 14 during storage of the SPME Arrow 1, and the like.

When the conditioning is completed, the sample is collected in the sample collection unit 4 (Step S3). Specifically, the rod 13 of the SPME Arrow 1 is once accommodated in the needle 12, and the body moving unit 20 moves the SPME Arrow 1 to a predetermined position of the sample collection unit 4. Then, the plunger drive unit 21 pushes the plunger 11 to insert the tip of the rod 13 (adsorption part 14) into the headspace in one prepared vial. A liquid or solid sample is sealed in this vial. The vial is heated to an appropriate temperature (for example, 60°C) and stirred at a predetermined rotation speed for a predetermined time. This promotes volatilization of components from the sample, and the headspace of the vial is filled with target components in a gas phase. The target components in the gas phase are adsorbed on the adsorption part 14.

In Step S3, since not only the target component but also a large amount of solvent in the sample (in the case of a liquid sample) exists in the headspace in the vial, this solvent is also adsorbed on the adsorption part 14. Therefore, in order to remove this solvent, a process of exposing the adsorption part 14 of the SPME Arrow 1 to an atmosphere in which dry inert gas flows for a predetermined time is performed (Step S4).

Specifically, the rod 13 of the SPME Arrow 1 is once accommodated in the needle 12, and the body moving unit 20 moves the SPME Arrow 1 into the recess 33 of the conditioning/solvent purge unit 3. The plunger drive unit 21 pushes the plunger 11 to expose the rod 13 (adsorption part 14). The heating/cooling unit 34 maintains the adsorption part 14 via the housing 30 at an appropriate temperature (for example, about 30 to 40°C) at which the target component does not volatilize for a certain period of time. Since the adsorption part 14 is exposed to the atmosphere of dry inert gas, water and organic solvent adsorbed on the adsorption part 14 volatilize and are removed.

As a matter of course, the temperature at this time is much lower than the temperature at the time of conditioning in Step S2, and is also sufficiently lower than the temperature for thermal desorption in Step S5 described later. Therefore, there is almost no influence on the target component adsorbed on the adsorption part 14. Since the housing 33 and the like of the conditioning/solvent purge unit 3 are heated to a high temperature during conditioning, the temperature does not drop to about 30 to 40°C during the process of Step S3 by natural heat dissipation. Therefore, the heating/cooling unit 34 may lower the temperature to, for example, about 30 to 40°C by cooling the housing 33 and the like after the completion of conditioning. Of course, the heating/cooling unit 34 may not perform cooling and may wait until the temperature drops by natural heat dissipation.

After the solvent removal process in Step S4 is executed for a predetermined time, thermal desorption is performed in the vaporization chamber 50 of the GC apparatus 5, and the target components adsorbed on the adsorption part 14 of the SPME Arrow 1 are introduced into the column 51 along with the flow of the carrier gas. Then, various target components are separated in the time direction while passing through the column 51, and are respectively detected by the detection unit 52 (Step S5).

Specifically, the rod 13 of the SPME Arrow 1 is once accommodated in the needle 12, and the body moving unit 20 moves the SPME Arrow 1 to a component introduction position above the vaporization chamber 50 of the GC apparatus 5. The plunger drive unit 21 pushes the plunger 11, causes the tip of the rod 13 to penetrate the septum at the top of the vaporization chamber 50, and inserts the adsorption part 14 into the vaporization chamber 50. At this time, since the vaporization chamber 50 is heated to a predetermined temperature (usually 200°C or higher), when the adsorption part 14 is inserted into the vaporization chamber 50, various target components adsorbed on the adsorption part 14 volatilize in a short time. The volatilized target components are carried by the carrier gas and introduced into the column 51 substantially simultaneously.

Since the flow rate of the carrier gas is small, the concentration of the target component in the gas is higher than that at the time of sample collection in Step S3. That is, the target component is concentrated to a high concentration and introduced into the column 51. Thereby, the target component can be detected with high sensitivity. Further, since the solvent is removed from the adsorption part 14 in Step S4, the amount of solvent introduced into the column 51 in Step S5 is significantly reduced compared to the amount adsorbed in Step S3. Therefore, a peak corresponding to the solvent hardly appears on the chromatogram created based on the detection signal in the detection unit 52. Thereby, the collapse of the waveform shape of the peak of the target component and the shift of the retention time caused by the influence of the solvent introduced into the column 51 in a large amount can be reduced.

### [Modifications]

In the sample introduction apparatus shown in Fig. 2, the unit 3 that performs both conditioning and solvent removal is provided, but a unit that performs conditioning and a unit that performs solvent removal may be provided separately. According to this configuration, since conditioning and solvent removal can be performed in parallel, there is a possibility that GC analysis for a large number of samples can be performed more efficiently.

Further, the ease of volatilization (difficulty of volatilization) of the solvent adsorbed on the adsorption part 14 differs depending on the type of adsorbent and liquid phase held on the adsorption part 14, the size of the SPME Arrow 1 (size of the surface area of the adsorption part 14), the type of solvent, and the like. Therefore, conditions such as the heating temperature, the flow rate of the inert gas, and the required time at the time of solvent removal in Step S4 are desirably changed or adjusted appropriately according to the type of SPME Arrow 1 used, the type of solvent in the sample, and the like. In a case where the configuration is such that the type of SPME Arrow used is automatically determined, it is also possible to perform control to automatically set conditions such as the heating temperature, the flow rate of the inert gas, and the required time at the time of solvent removal according to the determination result.

The above embodiment is an example of the present invention, and it is obvious that any modification, change, or addition made appropriately within the scope of the spirit of the present invention is included in the scope of the claims of the present application.

For example, although the SPME method is exclusively used for sample introduction in GC analysis, it is also possible to use the SPME method for other analysis techniques, for example, liquid chromatograph (LC) analysis and the like. Therefore, the sample introduction method and apparatus according to the present invention are not necessarily applicable only to GC analysis. However, generally in LC analysis, water, organic solvents, and the like are unlikely to interfere with the analysis of target components. In that respect, it can be said that the sample introduction method and apparatus according to the present invention are particularly useful in GC analysis.

### [Various Aspects]

It will be apparent to those skilled in the art that the exemplary embodiments described above are specific examples of the following aspects.

(Item 1) One aspect of the sample introduction method according to the present invention is a sample introduction method for performing collection and injection of a sample by a solid phase micro extraction method using an SPME Arrow, having:
an adsorption step of causing an adsorption part of the SPME Arrow to adsorb a target component in the sample;
an exposure step of exposing the adsorption part of the SPME Arrow after the adsorption step to an atmosphere of a dry inert gas for a predetermined time; and
an injection step of heating the adsorption part of the SPME Arrow after the exposure step to desorb the target component from the adsorption part and introduce the target component into an analysis apparatus.

(Item 4) One aspect of the sample introduction apparatus according to the present invention is an apparatus for implementing the sample introduction method according to Item 1, being a sample introduction apparatus that performs collection of a sample and injection into an analysis apparatus by a solid phase micro extraction method using an SPME Arrow, comprising:
an adsorption processing unit that inserts an adsorption part of the SPME Arrow into a container in which a sample is sealed and causes the adsorption part to adsorb a target component in the sample;
an exposure processing unit that exposes the adsorption part of the SPME Arrow after component adsorption in the adsorption processing unit is completed to an atmosphere of a dry inert gas for a predetermined time; and
a moving unit that moves the SPME Arrow between the adsorption processing unit and the exposure processing unit, and between the exposure processing unit and a component introduction position for introducing the target component adsorbed on the adsorption part into the analysis apparatus.

In the sample introduction method according to Item 1 implemented using the sample introduction apparatus according to Item 4, at least a part of the solvent in the sample adsorbed on the adsorption part in the adsorption step volatilizes in the exposure step and is removed from the adsorption part. Thereby, according to the sample introduction method described in Item 1 and the sample introduction apparatus described in Item 4, for example, the influence of a solvent such as water or an organic solvent derived from the sample upon GC analysis is reduced, and the collapse of the shape of the chromatographic peak of the target component and the shift of the retention time can be suppressed. As a result, the quantitative performance and identification performance of the target component can be improved.

(Item 2) In the sample introduction method according to Item 1, in the exposure step, the adsorption part of the SPME Arrow may be heated to a temperature lower than the temperature during heating in the injection step.

(Item 5) In the sample introduction apparatus according to Item 4, the exposure processing unit may include a heating unit that heats the adsorption part of the SPME Arrow to a temperature at which the target component does not desorb.

According to the sample introduction method described in Item 2 and the sample introduction apparatus described in Item 5, removal of the solvent from the adsorption part is promoted, so that the influence of the solvent derived from the sample upon GC analysis can be further reduced to improve the accuracy of analysis.

In the SPME method using an SPME fiber or SPME Arrow, generally, conditioning is performed prior to sample collection in order to remove contaminant components adhering to the adsorbent, residual components from the previous analysis, and the like.

(Item 3) Therefore, the sample introduction method according to Item 2 may further have a conditioning step of heating the adsorption part of the SPME Arrow in an atmosphere of an inert gas prior to the adsorption step, and the temperature of heating in the exposure step may be lower than the temperature of heating in the conditioning step.

(Item 6) Further, the sample introduction apparatus according to Item 5 may include a conditioning unit that cleans the adsorption part of the SPME Arrow by heating the adsorption part in an atmosphere of an inert gas, and the conditioning unit may also be used as the exposure processing unit.

According to the sample introduction method described in Item 3, it is possible to avoid introduction of contaminant components and residual components other than the target component into the GC apparatus, and further improve the accuracy of analysis. Further, according to the sample introduction apparatus described in Item 6, since the unit for conditioning can be utilized to also perform solvent removal, there is no need to newly add a component for solvent removal, and an increase in the cost of the apparatus can be suppressed. In addition, an increase in the size and weight of the apparatus can also be suppressed.

### [Reference Signs List]

1... SPME Arrow
10... Holder
11... Plunger
12... Needle
13... Rod
14... Adsorption Part
2... SPME Arrow Drive Unit
20... Body Moving Unit
21... Plunger Drive Unit
3... Conditioning/Solvent Purge Unit
30... Housing
31... Gas Supply Opening
32... Gas Discharge Opening
33... Recess
34... Heating/Cooling Unit
4... Sample Collection Unit
5... GC Apparatus
50... Vaporization Chamber
51... Column
52... Detection Unit

## Claims

1. A sample introduction method for performing collection and injection of a sample by a solid phase micro extraction method using an SPME Arrow, having:
an adsorption step of causing an adsorption part of the SPME Arrow to adsorb a target component in the sample;
an exposure step of exposing the adsorption part of the SPME Arrow after the adsorption step to an atmosphere of a dry inert gas for a predetermined time; and
an injection step of heating the adsorption part of the SPME Arrow after the exposure step to desorb the target component from the adsorption part and introduce the target component into an analysis apparatus.

2. The sample introduction method according to claim 1, wherein in the exposure step, the adsorption part of the SPME Arrow is heated to a temperature lower than a temperature during heating in the injection step.

3. The sample introduction method according to claim 2, further having a conditioning step of heating the adsorption part of the SPME Arrow in an atmosphere of an inert gas prior to the adsorption step, wherein
a temperature of heating in the exposure step is lower than a temperature of heating in the conditioning step.

4. A sample introduction apparatus that performs collection of a sample and injection into an analysis apparatus by a solid phase micro extraction method using an SPME Arrow, comprising:
an adsorption processing unit that inserts an adsorption part of the SPME Arrow into a container in which a sample is sealed and causes the adsorption part to adsorb a target component in the sample;
an exposure processing unit that exposes the adsorption part of the SPME Arrow after component adsorption in the adsorption processing unit is completed to an atmosphere of a dry inert gas for a predetermined time; and
a moving unit that moves the SPME Arrow between the adsorption processing unit and the exposure processing unit, and between the exposure processing unit and a component introduction position for introducing the target component adsorbed on the adsorption part into the analysis apparatus.

5. The sample introduction apparatus according to claim 4, wherein the exposure processing unit includes a heating unit that heats the adsorption part of the SPME Arrow to a temperature at which the target component does not desorb.

6. The sample introduction apparatus according to claim 5, comprising a conditioning unit that cleans the adsorption part of the SPME Arrow by heating the adsorption part in an atmosphere of an inert gas, wherein
the conditioning unit is also used as the exposure processing unit.
